# EUROPEAN PATENT APPLICATION

(11) **EP 1 376 440 A1**
(43) Date of publication of application: **02.01.2004**
(21) Application number: 03388043.6
(22) Date of filing: 04.06.2003
(51) Int. Cl.: G06F 17/60

(54) **System and method for handling forms for information**

(30) Priority: 26.06.2002 US 179191
(71) Applicant: OTICON A/S, 2900 Hellerup (DK)
(72) Inventor: Overgaard, Morten, 2900 Hellerup (DK); Andersen, Kent, 2900 Hellerup (DK); Haslund, Jes, 2900 Hellerup (DK); Eir, Charlotte, 2900 Hellerup (DK); Jensen, Stefan Heise, 2900 Hellerup (DK); Anderson, Lars, 2900 Hellerup (DK); Lauritsen, Peer, 2900 Hellerup (DK); Worning, Mikael, 2900 Hellerup (DK)
(74) Representative: Christensen, Mikael T.

(57) **Abstract**

The invention comprises a system for handling forms for transferring . The system comprises a number of local workstations where at least one local workstation is connectable through a datatransmission line to a central data processing unit. The forms for transmitting information reside both at the central unit and at the local workstations. Activation of a data transmission line from a local workstation activates means for checking whether the latest version of the form is residing at the local workstation, and if this is not the case, the latest version of the form is transferred to the local workstation for future use.

## Description

### AREA OF THE INVENTION

The invention comprises a system and a method for handling forms for information. The system comprises a number of local workstation where one or more workstations are connectable through a datatransmission line to a central data processing unit. Such systems are used when clients or customers are placing orders at a host company by way of the Internet.

### BACKGROUND OF THE INVENTION

In traditional Internet based web-shopping systems the user is online when interacting with the system. This is feasible when the intended users are always connected to the internet and when the web shopping system does not need any interaction with any applications located on the users PC.

The traditional web shopping systems are lacking functionality in integration with existing software located on the users PC. For web shopping system to be successful data transfer from a local application on the user's PC to the web shopping system is needed. Also the prior art systems fail to provide forms with a special design for special groups of clients. This is often a problem in larger companies, where orders have to be handled from different groups of clients both divided by linguistic and other differences. Each group of clients may have demands for the language and for the appearance of the form or for a special product listing. Also it is often necessary to change the appearance of the form belonging to a group of clients. Further the clients often have a need for documentation of past ordering, and this is not easily implemented with the prior art systems.

The invention provides a system and a method by way of which the mentioned problems are solved.

### SUMMARY OF THE INVENTION

According to the invention a system for handling forms for transferring information is provided, where the system comprises one or more local workstations, and where at least one local workstation is connectable through a datatransmission line to a central data processing unit whereby the forms for transmitting information resides both at the central unit and at the local workstations where activation of the data transmission line from the local workstation to the central data processing unit activates means for checking whether the latest version of the form is residing at the local workstation, and if this is not the case, the latest version of the form is transferred to the local workstation and automatically installed for future use.

The local workstations can be single stations like PC's or comprise local networks having a number of interconnected stations, where at least one of the stations is connectable to the central unit. The data transmission line is possibly an internet connection or comprise some other form of data transmission line. At the level of the local workstations the forms may be handled of-line, but when an online connection to the central unit is made, it is automatically examined whether a new version of the form is residing at the central unit.

In the system according to the invention it is very easy to make groups of clients which have each their form. Assigning a group of clients to a particular form at the central processing unit does this. Further it is easy to make changes of the form for a group of clients. This is done by loading a new form into the central data processing unit. Whenever one of the clients belonging to the group using this form logs in at the central processing unit this new form is downloaded to the workstation of that client, where after this form is used. Usually the forms contain predefined fields wherein the client or user is to provide information, and the form with the information is transferred for further processing of the information. However the form may also contain information, like product information or advertising material, which the client may use.

According to an embodiment of the invention the forms are order forms and the order forms receive information from the local workstation upon activation. In this way information which is already keyed in at the local workstation or is otherwise known to the system can be automatically transferred to the order form. This requires the transferal of information from one ore more applications at the local workstation to the application handling the order form. In this way a lot of time- and annoying double keying can be avoided. The order forms must be returned to a production or storage facility, and this can be done in any known manner either by ordinary mail or through a data communication link like the Internet.

Preferably the order form comprises three data receiving sections:
- a first section for receiving data about the product being ordered,
- a second section for receiving data about the person who is to receive the product and
- a section for receiving data about the client ordering the product at the local workstation.

Preferably the product is a custom made part which is to fit a body part of the person who is to receive the product and the data about the person who is to receive the product comprises a data file with a geometric model of the body part, which the product is to fit.

If the product is a hearing aid, an ear-piece must be made. The ear-mould can be made by firstly measuring the internal dimensions of the ear and ear canal, and then use dimension data for the production of an ear-piece. These data must be transferred to a central production facility, and the order form then comprises means for handling a data file containing these data.

### BRIEF DESCRIPTION OF THE DRAWINGS

Fig. 1 shows an overview of a system according to the invention.
Fig. 2 is a part of an order form, wherein data residing at the local workstation has been transferred to the order form,
Fig. 3 is another part of the order form.

### DESCRIPTION OF A PREFERRED EMBODIMENT

The solution described in the following is based on an order form system for Hearing Care Professionals (HCP), but it is clear that the system us usable in other connections, like systems for ordering dental prostheses. The system comprise the following parts:
- Client Application,
- Web Server Application

The Client Application is the piece of software that needs to be installed on every HCP PC where the HCP wants to be able to order electronically with a Host Company.

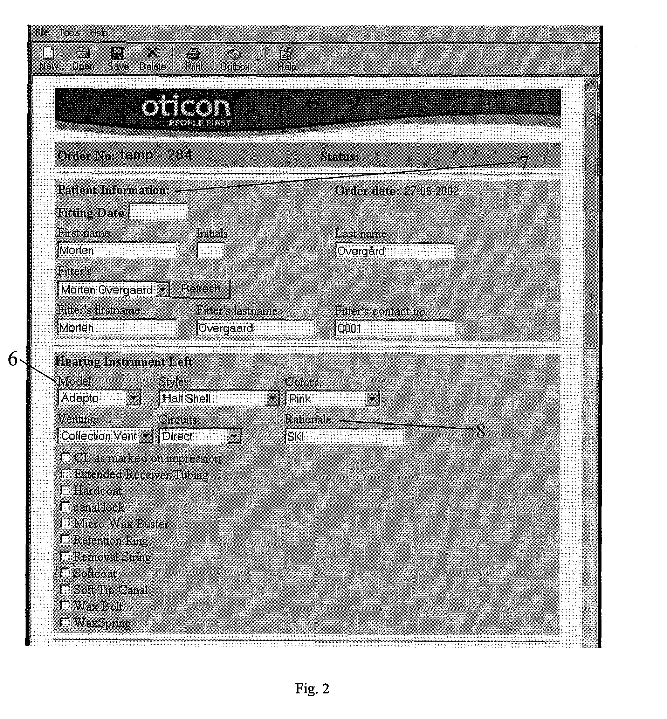

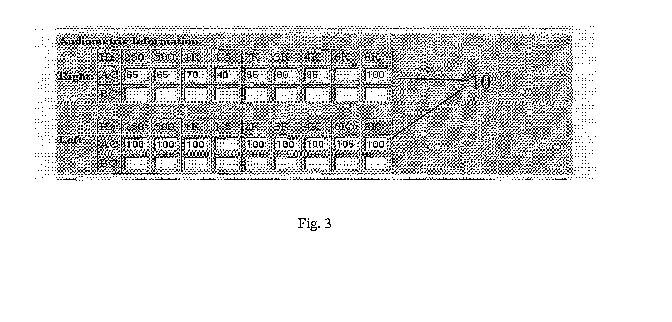

The Client Application consists of electronic order forms that can be started from within a fitting software or standalone. When started from a fitting software client information such as name, audiogram and selected hearing instrument is automatically transferred to the order form (partially shown in fig. 2 and fig. 3).

If the HCP has an Internet connection, orders can be submitted electronically to the Host Company. Alternatively orders can be printed and then faxed or mailed.

The purpose of the web servers 3 will be the processing/routing of the orders made by the HCPs. The web application will be used for all the orders from the different HCPs around the world.

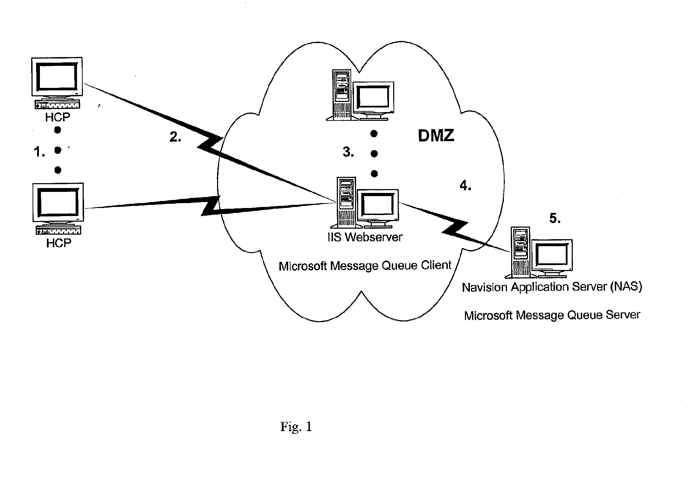

Referring to Fig. 1 the desktop computers at the HCP are shown at 1. These are the local workstations. The electronic communication protocol used for communication between HCP and the web server 3 is indicated by the flash 2. In the example displayed the web servers 3 carry out all the order processing. Though the figure shows the web servers 3 side by side, they will be located at different locations to eliminate single-point-of-failure. The web servers 3 will forward the orders to the Host Companies where a local server 5 will receive them. The data between the web server 3 and the sales company server 5 is passed along with a suitable Internet message handling tool illustrated by flash 4.

The Client Application makes it possible for the HCP to store all orders in a database for future browsing. The database can be installed in a network drive, which enables several HCP's at the same location to share the database, hence they can see each other's orders.

Automatical downloading of new order forms through the internet is facilitated by the Client Application and this makes it possible for the Host Company to distribute new order forms to the HCP through the internet avoiding the cost of distributing order forms on CD's or other kind of storage medium. At the same time this ensures, that all the clients' who have on-line connection with the web server 3 use the newest version of the order form.

The Client Application needs to be installed on every local PC 1 that wants to use the application. The database however can be installed on a network drive thus enabling sharing of the database among several HCPs working in the same clinic.

For HCP's not having a fast Internet connection it can be a cumbersome procedure connecting to the internet. Therefore the Client Application will make it possible for the HCP to do batch submission of orders. The HCP can save all the orders in the database and by the end of the day submit all the saved orders.

The web server 3 will provide a directory to every Host Company where all Order forms will reside. If a Host Company wants to publish a new Order form it has to be saved in this particular folder. The Client Application installed at the HCP will automatically detect any new order forms, when an on line connection is made, and the new order form is downloaded and installed at the PC of the HCP.

In the following an example of the system functionality is given with reference to fig. 2 and fig. 3.

The order form is typically activated by the HCP from a fitting program. Firstly a dialog box (not shown) containing the different order forms that can be used appears. The Client Application does not know what action to complete when initiated from the fitting program, hence the HCP has to choose the right order form. The order form is preferably a HTML format document. After the HCP has chosen the wanted form, the selected hearing aid model 6 and rationale 8, together with audiogram 10 and other Client data 7 from the fitting program is inserted in the form, and the main application starts up as seen in figs. 2 and 3. The remaining part of the order form contains information on styles, venting, fitters name, and information about billing and shipment of the purchased apparatus and also a field for comments (not shown).

When the dispenser has filled out the remaining part of the Order form - he can do the following with the order:

### Save it:

The order is archived in a central database. Since all orders are saved in a central database, HCP A can see HCP B's orders and vice versa provided they are connected to the same local network.

### Print it:

The printed order form may have a slightly changed view compared to the order form in the Client Application due to transformation of input fields into standard text format.

### Submit it:

The order is submitted electronically to one of two possible web servers. After successful submission, a confirmation page will be shown.

When printing or submitting, the order is automatically saved first.

## Claims

1. System for handling forms for transmitting information, where the system comprises one or more local workstations, and where at least one local workstation is connectable through a datatransmission line to a central data processing unit whereby the forms for transmitting information resides both at the central unit and at the local workstations where activation of the data transmission line from the local workstation to the central data processing unit activates means for checking whether the latest version of the form is residing at the local workstation, and if this is not the case, the latest version of the form is transferred to the local workstation and automatically installed for future use.

2. System as claimed in claim 1, wherein the forms are order forms and where the order forms receive information from the local workstation upon activation.

3. System as claimed in one ore more of the above claims, wherein the order form comprises three data receiving sections:
- A first section for receiving data about the product being ordered,
- A second section for receiving data about a person who is to receive and use the product and
- A section for receiving data about the client ordering the product at the local workstation.

4. System as claimed in claim 3, wherein the product is a custom made part which is to fit a body part of the person who is to receive the product and where the data about the person who is to receive the product comprises a data file with a geometric model of the body part, which the product is to fit.

5. Method for handling forms for transferring information where the forms reside both on a number of local work stations and on a central data processing unit, whereby at least one of the local workstations is connectedable through a datatransmission line to the central data processing unit where activation of the data transmission line from the local workstation to the central data processing unit triggers a procedure whereby it is checked whether the latest version of the form is residing at the local workstation, and if this is not the case, the latest wersion of the form is transferred from the central data processing unit to the lokal workstation and automatically installed for future use.

6. Method as claimed in claim 5, wherein the forms are order forms and where the order forms receive information from the local workstation upon activation.

7. Method as claimed in claim 5 or 6, wherein the order form receives three sets of data:
- a first set of data about the product being ordered,
- a second set of data about the person who is to receive the product and
- a third set of data about the client ordering the product at the local workstation.

8. Method as claimed in claim 7, wherein the product is a custom made part which is to fit a body part of the person who is to receive and use the product and where the data about the person who is to use the product comprises a data file with a geometric model of the body part, which the product is to fit.
